# EUROPEAN PATENT SPECIFICATION

(11) **EP 2 599 755 B1**
(45) Date of publication and mention of the grant of the patent: **28.01.2015**
(21) Application number: 13156901.4
(22) Date of filing: 19.09.2012
(51) Int. Cl.: C03B 33/03, C03B 33/037, C03B 33/07, C03B 33/027

(54) **Machine for performing cutting operations on laminated glass plates**
Maschine zum Durchführen von Schneideoperationen auf laminierten Glasplatten
Machine pour effectuer des opérations de découpe sur des plaques de verre feuilleté

(30) Priority: 18.10.2011 IT TO20110931
(43) Date of publication of application: 05.06.2013
(62) Divisional of application: 12185067.1
(73) Proprietor: Biesse S.p.A., 61122 Chiusa di Ginestreto (Pesaro Urbino) (IT)
(72) Inventor: Sideri, Paolo, 61122 Chiusa di Ginestreto (Pesaro Urbino) (IT); Aimar, Giacomo, 61122 Chiusa di Ginestreto (Pesaro Urbino) (IT)
(74) Representative: Notaro, Giancarlo

(56) References cited:
- EP-A1- 2 113 492
- ES-A1- 2 265 244
- US-A1- 2005 178 258

## Description

The present invention relates to machines for performing cutting operations on laminated glass plates, of the type comprising:
- a fixed workbench, defining a supporting plane for receiving the plate to be machined,
- a fixed cutting bridge on which an upper carriage, carrying an upper incision tool, and a lower carriage, carrying a lower incision tool, are movably mounted in a direction Y parallel to the longitudinal direction of the cutting bridge, said cutting bridge being provided with actuating means for driving the movement of said carriages along the Y direction,
- means for moving said plate on the fixed workbench in a horizontal direction X orthogonal to the aforesaid direction Y,
- means for rotating the plate on said supporting plane, or a portion of the plate cut by said cutting bridge, said rotating means comprising:
- a gripping member for gripping a rear edge of the plate (with reference to the advancing direction of the plate on the supporting plane), and at least one plate engagement member, adapted to engage said rear edge of the plate at a point spaced apart from said gripping member,
- said gripping member and said engagement member being movable along the Y direction of the cutting bridge and along the X direction of the supporting plane of the plate, respectively, and
- said machine further comprising an electronic control unit configured to drive a synchronous movement of said gripping member and said engagement member, along the Y direction and the X direction, respectively, in order to obtain a rotation of the plate on the supporting plane, and
- wherein said gripping member comprises a suction-cup element configured to engage one face of the plate adjacent to said rear edge, said suction-cup element being supported so that it is freely rotatable around a vertical axis by one of said carriages and being movable by actuating means along said vertical axis between a position of engagement of the plate and a position spaced apart from the plate.

Machines of the type indicated above are known, for example, from documents ES 2265244 and EP 2113492.

In order to increase the versatility of the machine, at the same time rendering it capable of optimal operation in any operating condition, the present invention relates to a machine of the type described above, characterized in thatit has the features indicated in claim 1..

Therefore, in the machine according to the invention, said at least one engagement member comprises a first and a second engagement elements which are adapted to engage the rear edge of the plate at successive stages, so as to obtain the required rotation of the plate.

Preferably, the first engagement element is carried by the fixed structure of the machine upstream of the plate and is movable in the advancing direction of the plate to apply a force in said direction on the rear edge in order to cause the plate to perform a first part of the required rotation. Still in said preferred embodiment, the second engagement element is carried by an auxiliary bridge which is movable below the supporting plane downstream of the fixed cutting bridge and is configured to engage the rear edge of the plate through a longitudinal slot of the supporting plane. The auxiliary bridge is movable in the advancing direction of the plate in order to pull the rear edge of the plate in that direction, through the second engagement element, until completion of the required rotation.

Preferably, the auxiliary bridge is provided with a number of stop elements which are configured to be raised above the supporting plane through slots arranged in the workbench so as to stop the plate at a position corresponding to the required cutting length, and the second engagement element being an additional element with respect to the stop elements which is arranged on the auxiliary bridge and is not adapted to be used for the aforesaid stop function of the plate at the required cutting length.

Thanks to these additional characteristics, it is possible to achieve rotation of the plate even when the rear edge of the plate is initially positioned too far upstream of the cutting line defined by said cutting bridge.

The invention will now be described, purely by way of non-limiting example, with reference to the figures of the accompanying drawings, wherein:
- Figures 1 to 3 refer to the machines of the prior art,
- Figures 4 and 5 are a schematic view and a plan view on an enlarged scale, respectively, of a portion of the machine according to the present invention,
- Figures 6-8, 11, and 13-17 are plan views which show some steps of the rotating operation of the plate, in sequence, and
- Figures 9, 10, and 12 are schematic views on an enlarged scale of a portion of the machine in different steps of the rotating operation of the plate.

In the following description various specific details are illustrated aimed at providing a thorough understanding of the embodiments. The embodiments can be implemented without one or more of the specific details, or with other methods, components, materials, etc. In other cases, structures, construction details, materials, or known operations are not illustrated or described in detail, as they can be implemented in any known way, and as also, when considered separately, they do not fall within the context of the present invention

The cutting operation of laminated glass plates is very complex. These plates, the use of which has become increasingly common in cases where, in the event of accidental impacts, the glass must not shatter, include an upper glass plate, a lower glass plate and an intermediate plate or film of synthetic plastic material, usually polyvinyl butyral (PVB).

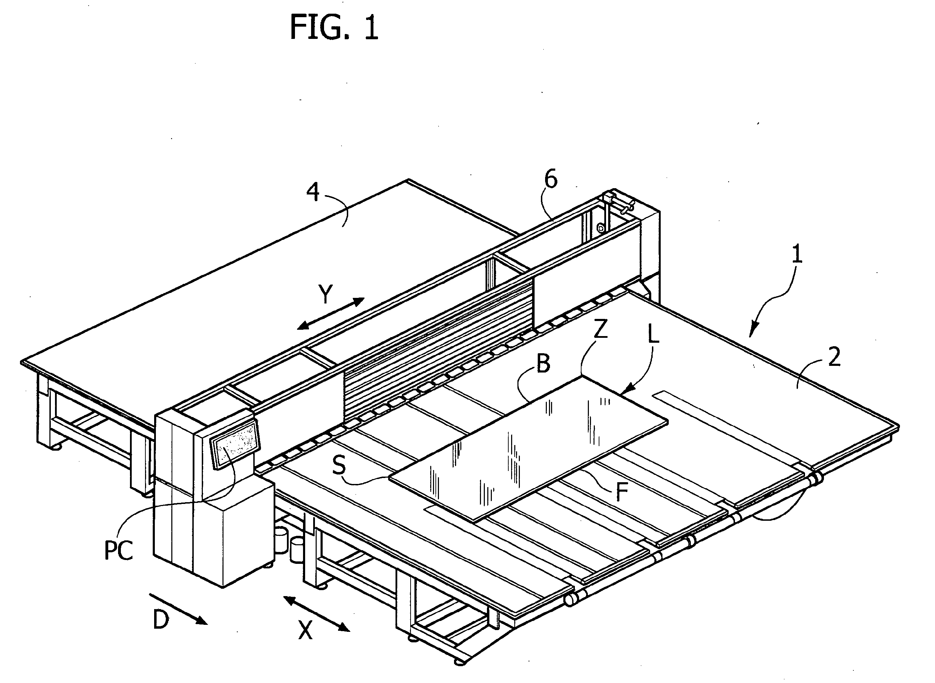

Automatic cutting of laminated glass plates is obtained with machines of the type illustrated in Figure 1, comprising a workbench 1, defining a supporting plane 2 for the glass plates L, a fixed bridge 6, and a supply plane 4 of the plates. The cutting of the laminated glass plate L is obtained with a first incision step of the upper and lower plates, a breaking step to separate into two portions each of the upper and lower plates, a softening step of the plastic plate and a detachment or tearing step of the plastic plate to obtain a total separation of the two portions of the laminated glass plate.

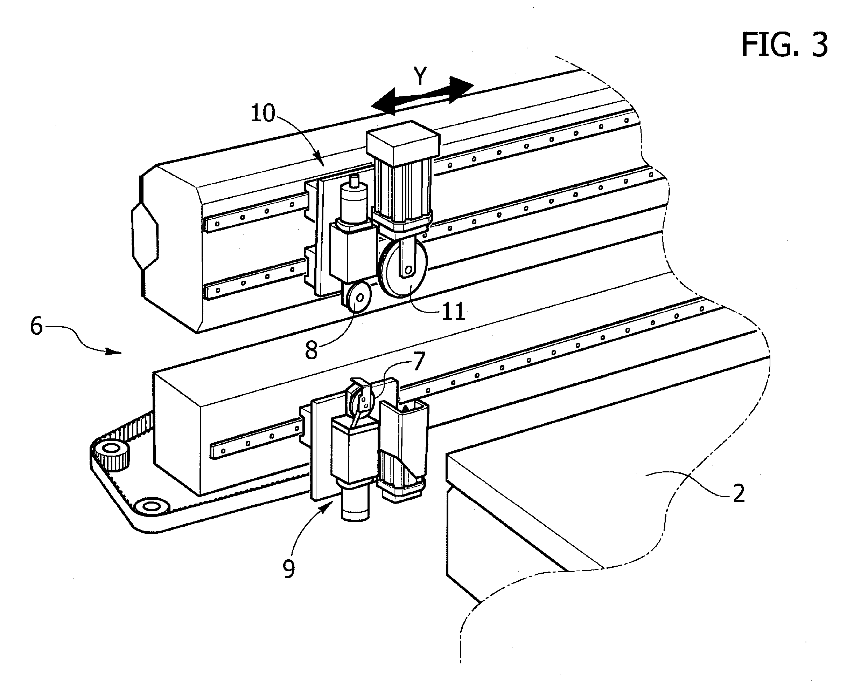

Due to the relative complexity of such operations, the bridge 6 is fixed with respect to the workbench, as it is a very complex and heavy structure. One example of an embodiment of the devices arranged on the fixed bridge 6 is visible in the attached figure 3, which also refers to the prior art. The fixed bridge 6 comprises roller incision tools 7 and 8 arranged, respectively, above and below the worktable 2, carried respectively by two carriages, 9 and 10, slidable along the Y direction on the bridge 6. The bridge 6 further comprises means for breaking the upper plate and the lower plate, between which a breaking wheel is included, for example, of the type indicated with the reference numeral 11 in Figure 3. Means for heating the plastic film (not shown) are also provided that intervene following the breaking operation, prior to the detachment step.

As a consequence of the aforesaid structure and arrangement, these machines are only able to perform cutting of laminated glass plates along a straight line defined by the longitudinal direction of the fixed bridge 6. The plate must then be rotated into different positions below the cutting bridge 6 in order to perform straight cuts along its different sides. For example, in order to cut a starting plate multiple times to obtain smaller plates, the plate is divided into several transverse strips and after each strip is cut it is rotated 90° to divide it into more parts with subsequent cutting operations.

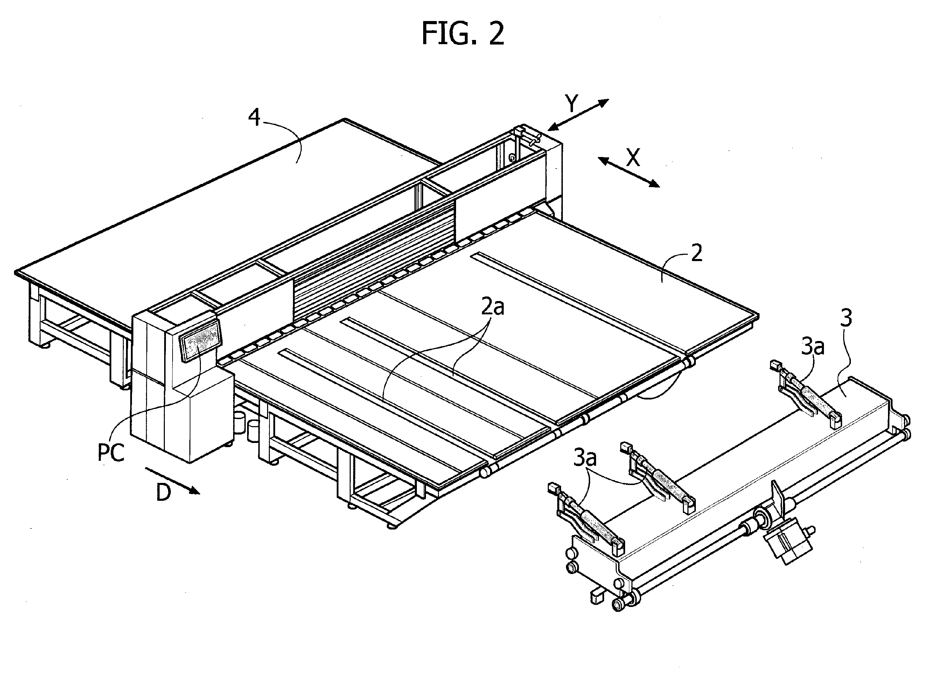

In the following description, reference will be made to a machine for cutting glass plates, in particular for laminated glass plates, of the type illustrated in Figures 1 and 2. Therefore the same references will be used hereinafter that were used in these figures to indicate the parts of the machine that remain unchanged, and new references will be given to the modified parts.

The machine according to the present invention comprises a fixed workbench 1, defining a supporting plane 2 intended for receiving the plate L to be processed and a fixed cutting bridge 6 on which an upper carriage 10 and a lower carriage 9 are movably mounted in a Y direction parallel to the longitudinal direction of the cutting bridge 6. The cutting bridge 6 is also provided with actuating means (not illustrated) for driving the movement of the carriages 9 and 10 along the Y direction.

In the present description and in the attached drawings, the constructional details of the cutting machine, the carriages 9 and 10 and the way in which they are slidably mounted along the cutting bridge 6, the incision rollers 7 and 8 and thrust rollers 11 and the way in which they are movably mounted on respective carriages 9 and 10 are not shown, as they can be made in any known way and as also, when considered separately, they do not fall within the context of the present invention. The same applies to the way in which movements of the carriages 9 and 10, and the rollers 7, 8, and 11, are controlled. These movements, in accordance with the prior art, are controlled by respective electric motors and drive transmissions not illustrated and not described. Moreover, still in accordance with the prior art, the electric motors that drive the various moving parts of the machine are controlled by electronic control means programmable to allow the execution of predetermined machining cycles on the plates L to be processed.

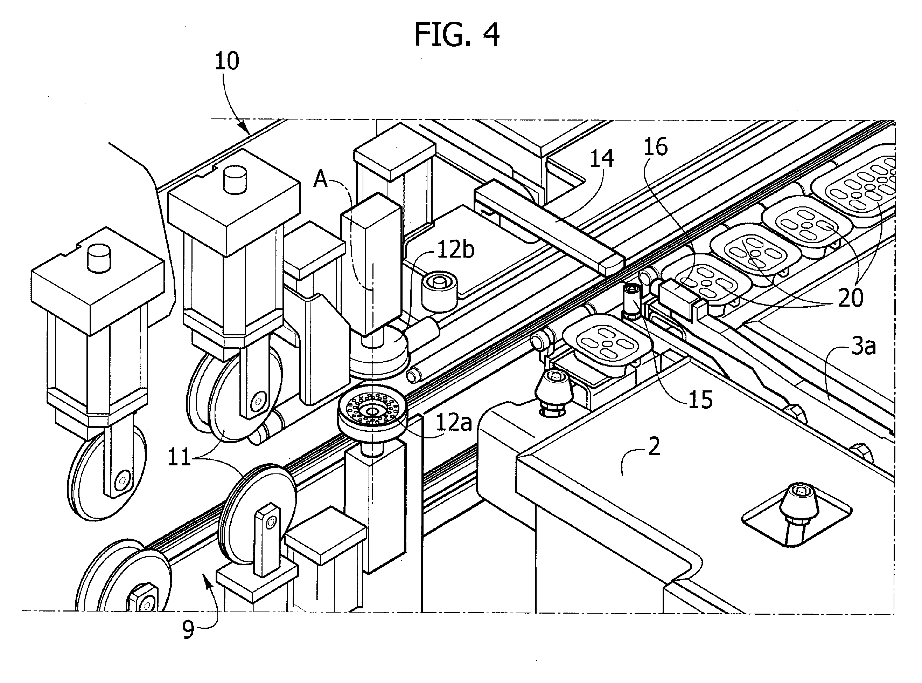

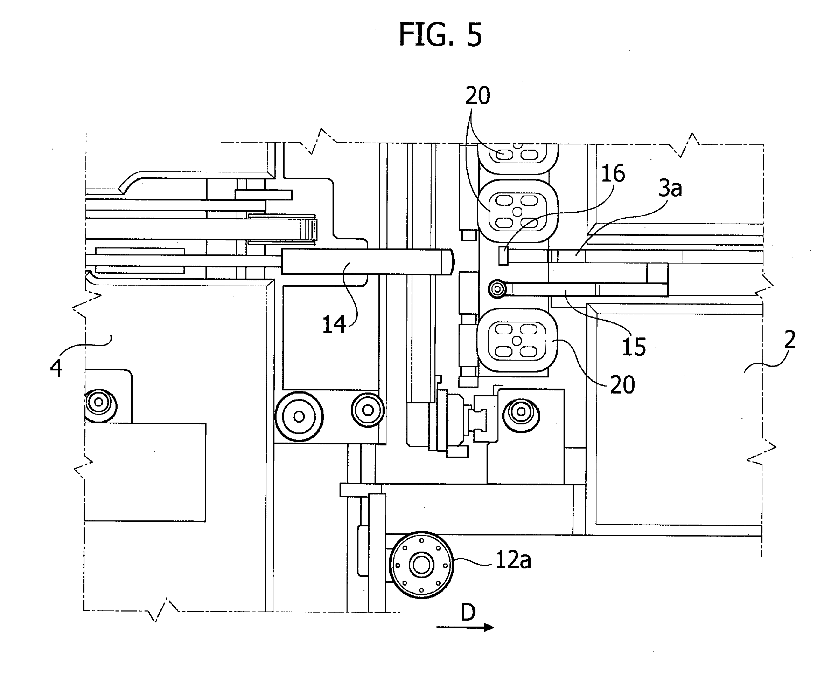

With particular reference to Figures 4 and 5, the preferred embodiment of the machine according to the invention comprises two suction-cup elements 12a and 12b carried respectively by the aforesaid lower and upper carriages 9 and 10. The two suction-cups are coaxial and are freely rotatable about a vertical axis A. The suction-cups communicate with a vacuum source not shown in the drawings. The lower suction-cup 12a engages the lower face of the plate L adjacent to the rear edge B of the plate, while the upper suction-cup 12b engages the upper face. The two suction-cups are carried in a freely rotatable manner about the vertical axis A by the respective carriage. The suction-cups are also movable by actuating means along the vertical axis A between an engagement position of the plate and a position spaced apart from the plate. The two suction-cups mounted on the carriages 9 and 10 are movable along the Y direction, or rather, along the cutting line, thanks to actuating means for driving the motion of the carriages (not shown in the figures). The maximum size of the suction-cup 12a is defined by the empty space available between the work plane 2, upstream, and the supply plane 4, downstream, of the cutting line defined by the cutting bridge 6.

As an alternative to using two suction cup elements, a second element 12b cooperating with the suction cup element 12a can be used, configured to engage the face of the plate L opposite to that engaged by the suction cup 12a.

The cooperating element 12b may be a pressing element configured for pressing the plate L against the suction cup element 12a which engages the opposite face of the plate L.

In a known manner, the preferred embodiment of the machine according to the present invention further comprises a plurality of suction-cups 20, aligned and arranged on the edge of the work plane 2, which extend in the Y direction, i.e. parallel and adjacent to the cutting line. The suction-cups 20 communicate with a vacuum source, not shown. These suction-cups 20 are used to block the plate L during cutting and breaking operations.

Still with reference to Figures 4 and 5, the machine according to the present invention comprises a first engagement element in the form of thrust blade 14 and a second engagement element in the form of drive pin 15, configured for intervening on the rear edge B of the plate L in successive stages, in order to obtain the required rotation of the plate.

An electronic control unit PC is also provided (see Figures 1 and 2), configured to control a synchronous movement of the gripping suction-cups 12a and 12b along the Y direction, as well as the two engagement members (thrust blade 14 and drive pin 15) in the X direction to obtain a rotation of the plate on the support plane 2. The electronic control unit PC is programmed to control both suction-cup elements, by activating either one or both suction-cup elements, depending on the characteristics of the glass plate and/or the required operating speed.

The thrust blade 14 is carried by the fixed structure of the machine upstream of the plate and the cutting line and is movable in the advancing direction of the plate (indicated in the drawings with the reference D) to exert a thrust in the same direction on the rear edge B of the plate in order for the plate to complete a first part of the rotation required.

The drive pin 15 is carried by an auxiliary bridge 3 movable below the supporting plane downstream of the fixed cutting bridge and is adapted to engage the rear edge B of the plate L through a longitudinal slot 2a of the support plane. The auxiliary bridge 3 is movable in the advancing direction of the plate D in order to pull the rear edge B of the plate L in that direction by means of the driving pin 15, until completion of the required rotation.

The auxiliary bridge can, for example, be a positioning abutment bridge 3, known per se, typically used in order to position the plate L for cutting to length of a strip starting from a semi-processed plate. As known, the positioning abutment bridge 3 comprises a plurality of articulated arms 3a on which stop members or abutment feet 16 are mounted, against which the front edge F of the plate is placed to position the plate in order to cut it to the required size.

The auxiliary bridge 3 is provided with a series of stop elements 16 that can be raised above the support plane 2 through slots 2a arranged in the workbench 1 and configured for stopping the plate in the position corresponding to the required cutting length. The second engagement element is an additional element with respect to the stop elements and is arranged on the auxiliary bridge 3; it is not adapted to be used for the aforesaid stop function of the plate at the required cutting length.

The actuating means of the axial displacement of the suction-cup element 12a and actuating means of the axial displacement of the cooperating element 12b are selected from a hydraulic actuator, a pneumatic actuator, or an electromechanical actuator comprising an electric motor and a screw-end-nut system driven by the electric motor.

The drive pin 15 is mounted parallel to the first articulated arm 3a and is also carried by the auxiliary bridge 3. The pin 15 runs in the same longitudinal slot 2a of the support plane, which in this case is wider.

The drive pin 15 comes into operation at a later time, after the rear edge B of the plate L has been moved downstream by a sufficient quantity. Indeed, after cutting and separation, the cut plate is blocked thanks to the suction cups 12a and 12b and the thrust blade 14 imparts a first rotation to the plate about the fulcrum defined by the suction-cups themselves.

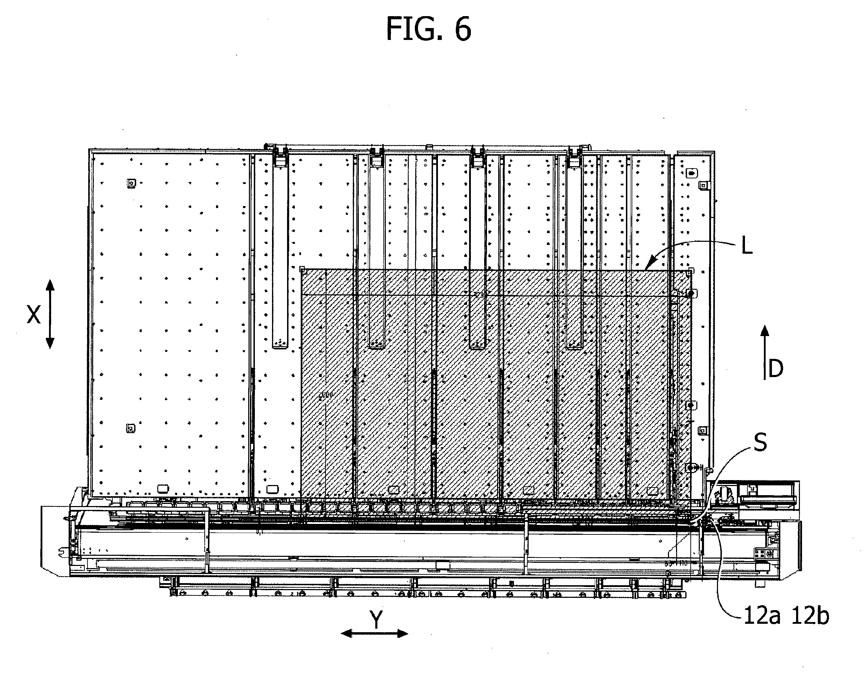

Figure 6 illustrates the first step of the rotation sequence. In particular, the plate L has its rear edge B positioned on the cutting line and the suction-cups 12a and 12b are in their resting condition, and positioned at the side of the cutting bridge. This step terminates with the transverse cut and retreating of the plate on the supply plane 4.

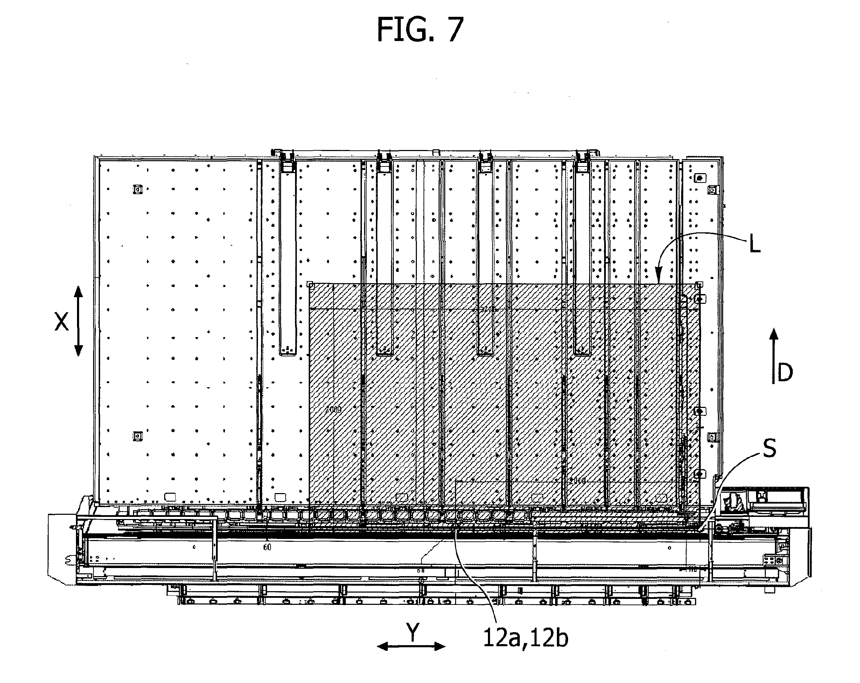

In a second step (Figure 7) the retreat of the plate is carried out thanks to the positioning bridge or abutment bridge 3 (thanks to a thrust by the abutment feet). In this step, the suction-cups 12a and 12b are carried, via the two carriages 9 and 10, into an intermediate position of the cutting bridge 6 and enter into contact with the plate L (either one or both suction-cup), or rather in their operating condition. In this way the plate L is constrained at the point where it is in contact with the suction-cups 12a and 12b.

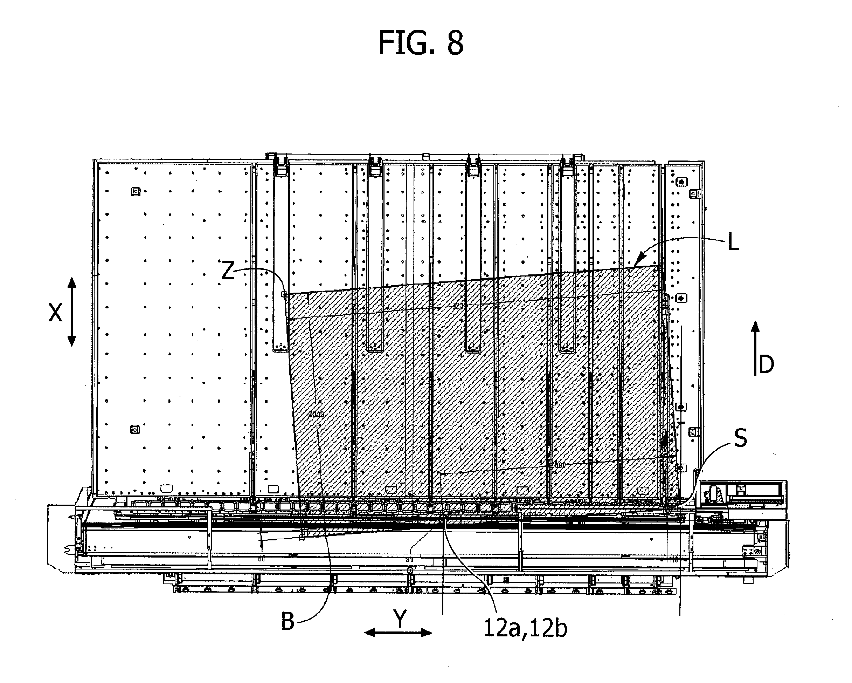

Figure 8 shows the final condition of the third step. During the third step the thrust blade 14 intervenes in order to impart a first rotation to the plate L around the fulcrum defined by the suction-cups 12a and 12b. In particular, the thrust blade 14 acts on the rear edge B (with respect to the advancing direction D of the plate) and in the vicinity of a corner S. In this way, the plate L is forced to rotate around the vertical axis A of the suction-cups 12a and 12b, moving the corner S in the advancing direction D of the plate. The opposite corner Z is moved in the opposite direction, and therefore is positioned on the supply plane 4 upstream of the cutting bridge. In this step the carriages that carry the suction-cups are stationary.

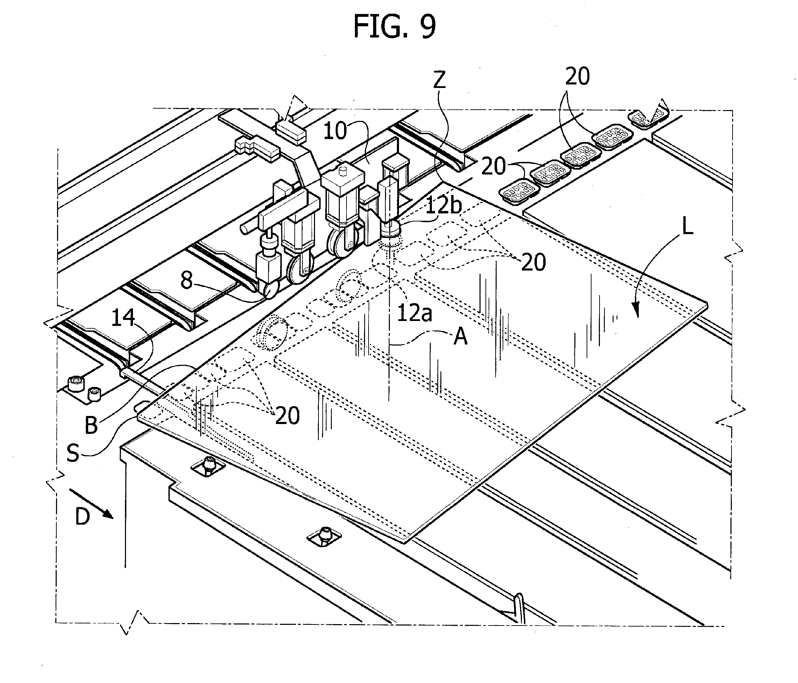

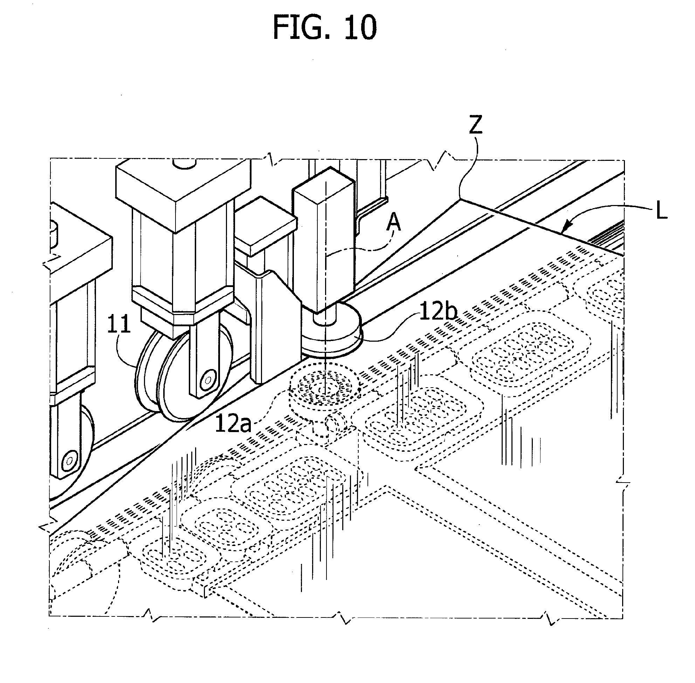

Figures 9 and 10 show the same step shown in figure 8, but in a different perspective. In particular, Figure 10 is an enlarged detail of Figure 9. Here it is possible to see the two suction-cups 12a and 12b in the operating condition of engagement of the plate L.

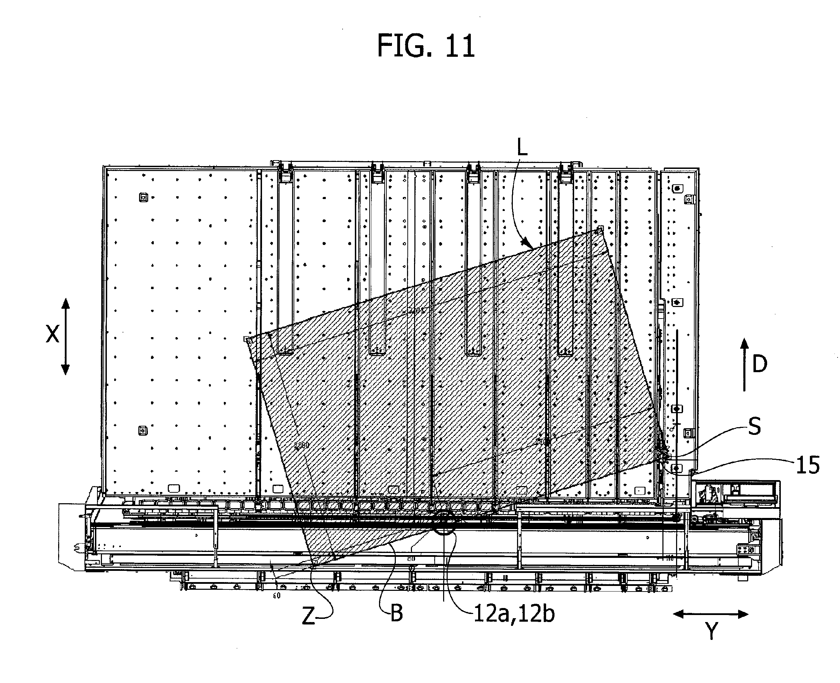

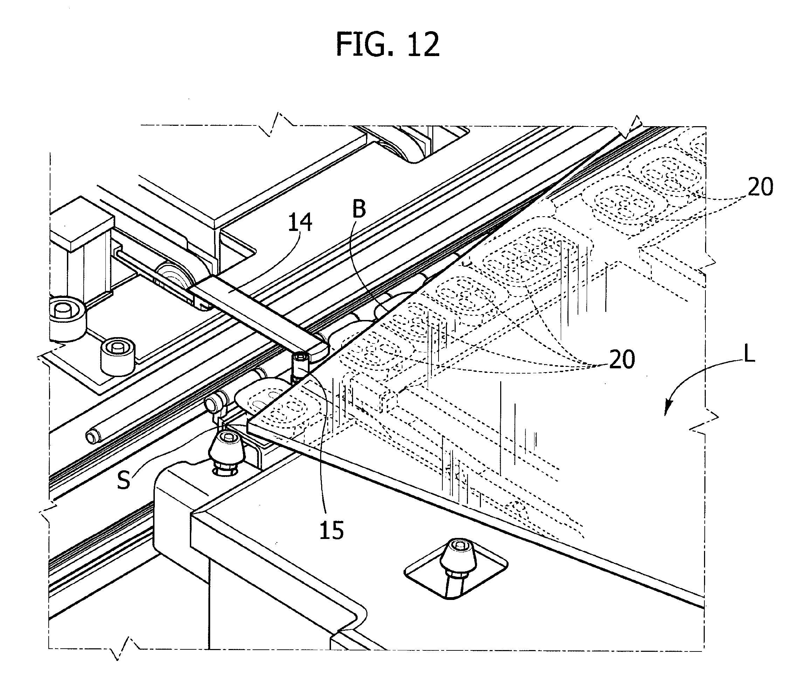

Figures 11 and 12 show the fourth stage of the rotation sequence of the plate L. In this step the drive pin 15 comes into play, which emerges upstream of the rear edge B of the plate in the vicinity of the corner S. The drive pin 15 is always downstream with respect to the cutting line, and is in the form of an idle roller with a vertical axis freely rotatable about its axis. It is dragged in the advancing direction D of the plate L by the auxiliary bridge 3 which runs under the worktable 2 and drags the rear edge B of the plate. The plate which is engaged by the suction-cups 12a and 12b rotates around the vertical axis A. Its corner S advances on the work plane 2 downstream of the cutting bridge 6, while the opposite corner Z advances on the supply plane 4 of the plates, upstream of the cutting bridge 6. At the same time the suction-cups 12a and 12b are moved along the Y direction to follow and support the rotation of the plate L. This step therefore has a combined movement of the drive pin 15 carried by the auxiliary bridge 3 and the carriages 9 and 10 that carry the suction-cups 12a and 12b.

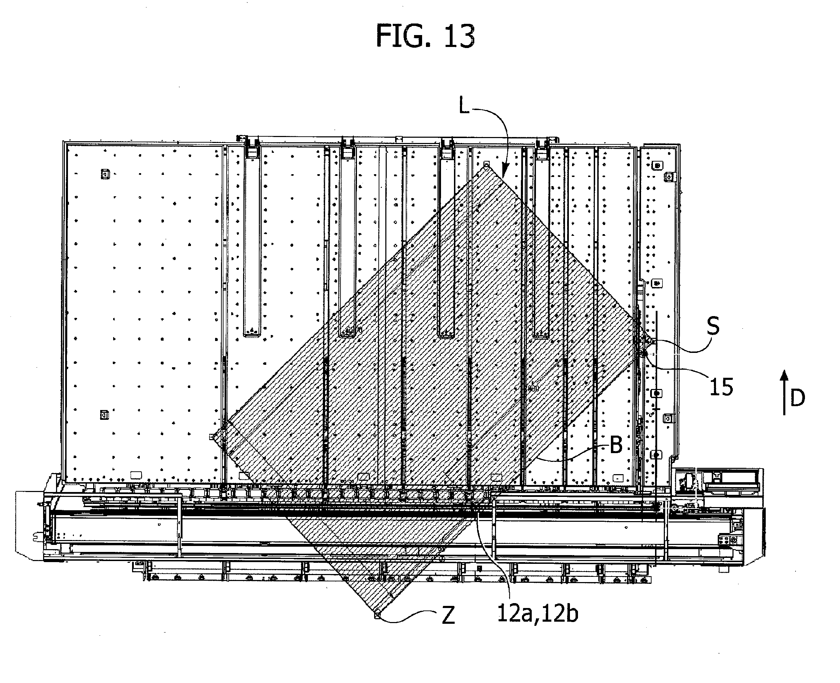

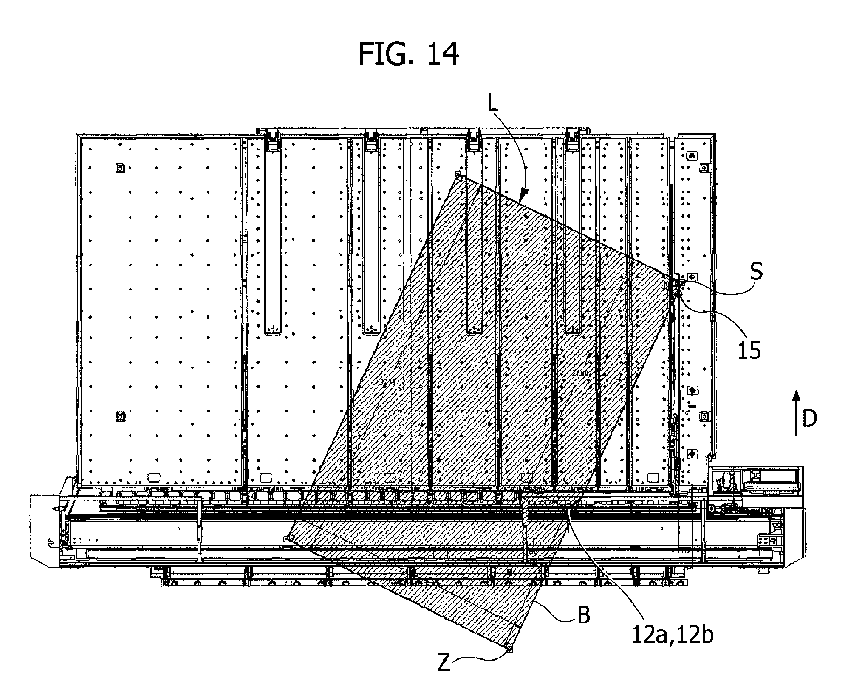

Figure 13 shows a continuation step of the rotation of the plate which exploits the combined movement of the auxiliary bridge 3 and the carriages 9 and 10 that carry the suction cups 12a and 12b, up to the maximum possible capacity of the auxiliary bridge (illustrated in Figure 14).

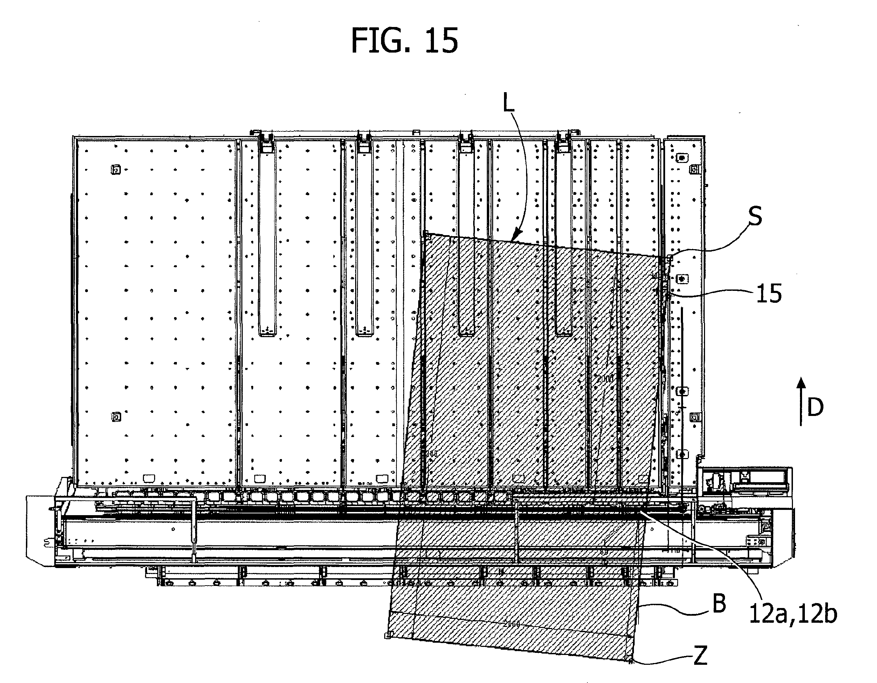

Figure 15 instead shows a step in which the rotation continues by means of the movement of the carriages 9 and 10 that carry the suction cups 12a and 12b, while the auxiliary bridge 3 remains stationary and the rolling of the plate of glass occurs against the drive pin 15.

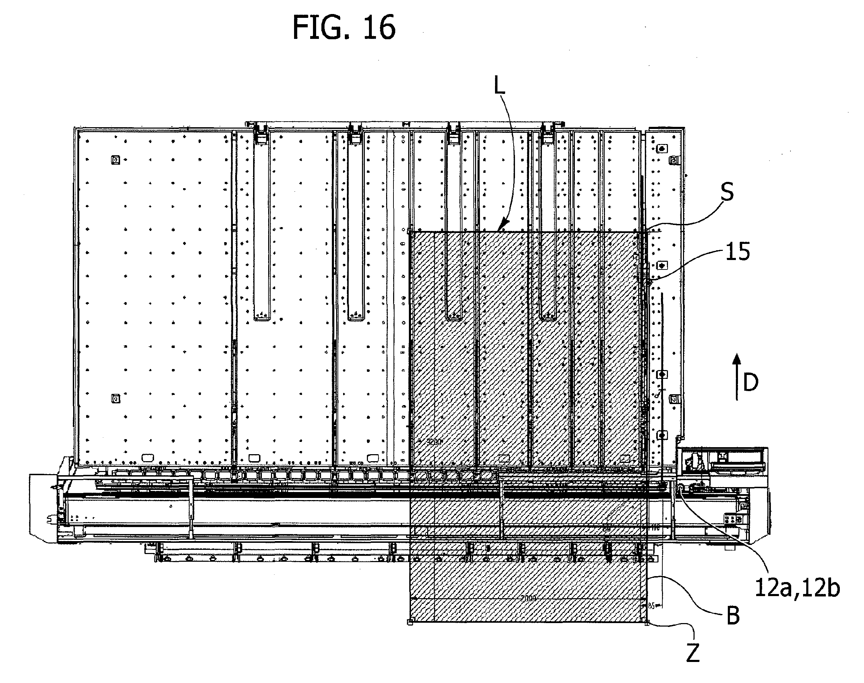

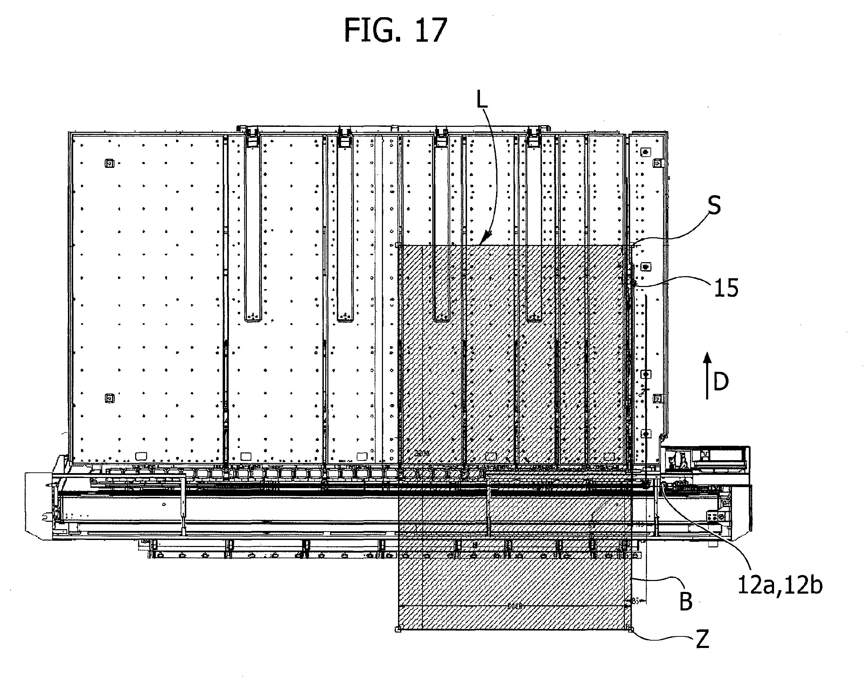

Finally, Figures 16 and 17 show the stopping steps of the rotation via halting of the carriages 9 and 10 and the squaring and the measured positioning (via the auxiliary abutment bridge 3) for the new cut.

As illustrated and described, the drive pin 15 never exceeds the cutting line, but comes into contact with the rear edge B of the plate L after the plate has been pushed beyond the cutting line (i.e. downstream of the cutting bridge 6) by the thrust blade 14. In addition, the drive pin 15 is not aligned with the abutment feet 16, but protrudes towards the upstream part of the machine. It does not use an abutment foot in order to avoid its wear.

Consequently, without prejudice to the principle of the invention, the details of construction and the embodiments may vary, even significantly, with respect to those described and illustrated, purely by way of non-limiting example, without thereby departing from the scope of the invention, as defined by the claims that follow.

## Claims

1. Machine for performing cutting operations on laminated glass plates (L), comprising:
- a workbench (1), defining a supporting plane (2) which is to receive the plate (L) to be worked,
- a fixed cutting bridge (6) on which an upper carriage (10), carrying an upper incision tool (8), and a lower carriage (9), carrying a lower incision tool (7), are movably mounted in a direction Y parallel to the longitudinal direction of the cutting bridge (6), said cutting bridge (6) being provided with actuating means for driving the movement of said carriages (9, 10) along the Y direction,
- means for moving said plate (L) on the fixed workbench (1) in a horizontal direction X orthogonal to said Y direction,
- means (12a, 12b, 14, 15) for causing the plate, or a plate portion cut by said cutting bridge (6), to rotate on said supporting plane, said rotating means comprising:
- a gripping member (12a) for gripping a rear edge (B) of the plate (with reference to the direction of advancement of the plate on the supporting plane), and at least one plate engagement member (14, 15) adapted to engage said rear edge (B) of the plate at a point spaced apart from said gripping member (12a),
- said gripping member (12a) and said engagement member (14, 15) being respectively movable along the Y direction of the cutting bridge (6) and along the X direction of the plate supporting plane (2), and
- said machine further comprising an electronic control unit (PC) configured to drive a synchronous movement of said gripping member (12a) and said engagement member (14, 15) respectively along the Y direction and the X direction to obtain a rotation of the plate on the supporting plane (2), and
- wherein said gripping member (12a) comprises at least one suction-cup element (12a) configured to engage one face of the plate adjacent to said rear edge (B), said suction-cup element (12a) being supported so that it is freely rotatable around a vertical axis (A) by one of said carriages (9,10) and being movable by actuating means along said vertical axis (A) between a position for engaging the plate and a positions spaced apart from the plate,
**characterized in that** said at least one engagement member (14, 15) comprises first (14) and second (15) engagement elements which are adapted to engage said rear edge (B) of the plate at different subsequent stages, so as to obtain the required rotation of the plate, and
- said first engagement element (14) is carried by the fixed structure of the machine upstream of the cutting bridge (6), and said second engagement element (15) is placed downstream of the fixed cutting bridge (6).

2. Machine according to claim 1, **characterized in that** said first engagement element (14) is movable in the advancement direction (D) of the plate to apply a force in said direction on said rear edge (B) in order to cause the plate to perform a first part of the required rotation.

3. Machine according to claim 1, **characterized in that** said second engagement element (15) is carried by an auxiliary bridge (3) which is movable below the supporting plane (2) and is configured to engage said rear edge (B) of the plate through a longitudinal slot (2a) of said supporting plane (2), said auxiliary bridge (3) being movable in the direction of advancement of the plate for pulling in said direction said rear edge (B) of the plate through said second engagement element (15), until completion of the required rotation.

4. Machine according to claim 3, **characterized in that** said auxiliary bridge (3) is provided with a number of stop elements (16) which are configured to be raised above the supporting plane (2) through slots (2a) provided in the workbench (1) so as to stop the plate at a position corresponding to the required cutting length, said second engagement element being an additional element with respect to said stop elements which is provided on said auxiliary bridge (3) and is not adapted to be used for the above mentioned function of stopping the plate (L) at the required cutting length.

5. Machine according to any of the previous claims, **characterized in that** said gripping member (12a) further comprises a second element (12b) cooperating with said suction-cup element and configured to engage the face of the plate (L) opposite to that engaged by the suction-cup element (12a) adjacent to said rear edge (B), said second cooperating element (12b) being carried by a respective carriage (10) so that it is freely rotatable around a vertical axis coincident with the vertical axis (A) of rotation of said suction-cup element and being movable by actuating means along said vertical axis (A) between a position for engaging the plate (L) and a position spaced apart from the plate, and
**in that** said electronic control unit (PC) is programmed to control both said suction-cup element (12a) and said cooperating element (12b), by activating only one or both these elements, depending upon the characteristics of the glass plate and/or the operative speed which is required.

6. Machine according to claim 5, **characterized in that** said cooperating element (12b) is also a suction-cup element.

7. Machine according to claim 5, **characterized in that** said cooperating element (12b) is a pressing element configured to press the plate (L) against the suction-cup element (12a) which engages the opposite face of the plate (L).

8. Machine according to claim 5, **characterized in that** said suction-cup element (12a) is carried by the lower carriage (9) of the cutting bridge (6) and is provided for engaging the lower face of the plate (L), whereas said pressing element (12b) is carried by the upper carriage (10) of the cutting bridge (6) and is provided for engaging the upper face of the plate (L).

9. Machine according to claim 5, **characterized in that** the actuating means for actuating the axial movement of said suction-cup element (12a) and the actuating means for driving the axial movement of said cooperating element (12b) are chosen among a hydraulic actuator, a pneumatic actuator, and an electromechanical actuator comprising an electric motor and a screw-end-nut system driven by the electric motor.

## Patentansprüche

1. Maschine zum Durchführen von Schneidvorgängen auf laminierten Glasplatten (L), umfassend:
eine Werkbank (1), definierend eine Tragebene (2), welche die zu bearbeitende Platte (L) aufnehmen soll,
eine feststehende Schneidebrücke (6), auf der ein ein oberes Schneidwerkzeug (8) tragender oberer Schlitten (10) und ein ein unteres Schneidwerkzeug (7) tragender unterer Schlitten (9) beweglich in einer Richtung Y parallel zur Längsrichtung der Schneidebrücke (6) angebracht sind, wobei die Schneidebrücke (6) mit Betätigungsmitteln zum Antreiben der Bewegung der Schlitten (9, 10) entlang der Y-Richtung versehen ist,
Mittel zum Bewegen der Platte (L) auf der feststehenden Werkbank (1) in einer horizontalen Richtung X orthogonal zur Y-Richtung,
Mittel (12a, 12b, 14, 15), welche die Platte oder einen Plattenabschnitt, die bzw. der von der Schneidebrücke (6) geschnitten wird, auf der Tragebene zum Drehen bringen, wobei die Drehmittel umfassen:
ein Greifglied (12a) zum Ergreifen eines rückwärtigen Randes (B) der Platte (mit Bezug auf die Vorschubrichtung der Platte auf der Tragebene) und mindestens ein Platteneingriffsglied (14, 15), das ausgestaltet ist, an einem von dem Greifglied (12a) beabstandeten Punkt mit dem rückwärtigen Rand (B) der Platte in Eingriff zu gelangen,
wobei das Greifglied (12a) und das Eingriffsglied (14, 15) jeweils entlang der Y-Richtung der Schneidebrücke (6) sowie entlang der X-Richtung der Plattentragebene (2) bewegbar sind, und
wobei die Maschine ferner eine elektronische Steuereinheit (PC) umfasst, die zum Antreiben einer Synchronbewegung des Greifglieds (12a) bzw. des Eingriffglieds (14, 15) entlang der Y-Richtung und der X-Richtung ausgebildet ist, um eine Drehung der Platte auf der Tragebene (2) zu bewirken, und
wobei das Greifglied (12a) mindestens ein Saugnapfelement (12a) umfasst, das zum Angreifen an einer Fläche der Platte angrenzend an den rückwärtigen Rand (B) ausgebildet ist, wobei das Saugnapfelement (12a) so gelagert ist, dass es von einem der Schlitten (9, 10) frei um eine senkrechte Achse (A) drehbar ist und von Betätigungsmitteln entlang der senkrechten Achse (A) zwischen einer Position zum Eingriff mit der Platte und einer von der Platte beabstandeten Position bewegbar ist,
**dadurch gekennzeichnet, dass**
mindestens ein Eingriffsglied (14, 15) erste (14) und zweite (15) Eingriffselemente umfasst, die ausgestaltet sind, mit dem rückwärtigen Rand (B) der Platte in verschiedenen nachfolgenden Stufen in Eingriff zu gelangen, um die erforderliche Drehung der Platte zu bewirken, und
wobei das erste Eingriffselement (14) durch den feststehenden Aufbau der Maschine stromaufwärts der Schneidebrücke (6) getragen ist und das zweite Eingriffselement (15) stromabwärts der feststehenden Schneidebrücke (6) befindlich ist.

2. Maschine nach Anspruch 1, **dadurch gekennzeichnet, dass** das erste Eingriffselement (14) in der Vorschubrichtung (D) der Platte bewegbar ist, um in dieser Richtung den rückwärtigen Rand (B) mit einer Kraft zu beaufschlagen, um die Platte dazu zu bringen, ein erstes Stück der erforderlichen Drehung durchzuführen.

3. Maschine nach Anspruch 1, **dadurch gekennzeichnet, dass** das zweite Eingriffselement (15) von einer Hilfsbrücke (3) getragen ist, die unter der Tragebene (2) bewegbar ist, und ausgebildet ist, mit dem rückwärtigen Rand (B) der Platte durch einen Längsschlitz (2a) der Tragebene (2) in Eingriff zu gelangen, wobei die Hilfsbrücke (3) in der Vorschubrichtung der Platte bewegbar ist, um den rückwärtigen Rand (B) der Platte in dieser Richtung durch das zweite Eingriffselement (15) zu ziehen, bis die erforderliche Drehung vollzogen ist.

4. Maschine nach Anspruch 3, **dadurch gekennzeichnet, dass** die Hilfsbrücke (3) mit einer Anzahl von Anschlagelementen (16) versehen ist, die ausgebildet sind, über die Tragebene (2) durch in der Werkbank (1) vorgesehene Schlitze (2a) hindurch angehoben zu werden, um die Platte an einer Position entsprechend der erforderlichen Schnittlänge anzuhalten, wobei das zweite Eingriffselement ein Zusatzelement bezüglich der Anschlagelemente ist, das auf der Hilfsbrücke (3) vorgesehen ist und nicht zur Verwendung für die oben erwähnte Funktion des Anhaltens der Platte (L) an der erforderlichen Schnittlänge ausgestaltet ist.

5. Maschine nach einem der vorstehenden Ansprüche, **dadurch gekennzeichnet, dass** das Greifglied (12a) ferner ein mit dem Saugnapfelement kooperierendes zweites Element (12b) umfasst, das ausgebildet ist, mit der Fläche der Platte (L) in Eingriff zu gelangen, die derjenigen gegenüberliegt, die angrenzend an den rückwärtigen Rand (B) mit dem Saugnapfelement (12a) in Eingriff ist, wobei das zweite kooperierende Element (12b) von einem jeweiligen Schlitten (10) getragen ist, so dass es um eine senkrechte Achse, die mit der senkrechten Drehachse (A) des Saugnapfelements zusammenfällt, frei drehbar ist, und durch Betätigungsmittel entlang der senkrechten Achse (A) zwischen einer Position zum Eingriff mit der Platte (L) und einer von der Platte beabstandeten Position bewegbar ist, und
dass die elektronische Steuereinheit (PC) derart programmiert ist, dass sie sowohl das Saugnapfelement (12a) als auch das kooperierende Element (12b) durch Aktivieren nur eines oder beider dieser Elemente je nach den Eigenschaften der Glasplatte und/oder der erforderlichen Betriebsgeschwindigkeit steuert.

6. Maschine nach Anspruch 5, **dadurch gekennzeichnet, dass** das kooperierende Element (12b) ebenfalls ein Saugnapfelement ist.

7. Maschine nach Anspruch 5, **dadurch gekennzeichnet, dass** das kooperierende Element (12b) ein Presselement ist, das ausgebildet ist, die Platte (L) gegen das Saugnapfelement (12a) zu pressen, das an der gegenüberliegenden Fläche der Platte (L) angreift.

8. Maschine nach Anspruch 5, **dadurch gekennzeichnet, dass** das Saugnapfelement (12a) von dem unteren Schlitten (9) der Schneidebrücke (6) getragen ist, und vorgesehen ist, um mit der unteren Fläche der Platte (L) in Eingriff zu gelangen, während das Presselement (12b) von dem oberen Schlitten (10) der Schneidebrücke (6) getragen ist, und vorgesehen ist, um mit der oberen Fläche der Platte (L) in Eingriff zu gelangen.

9. Maschine nach Anspruch 5, **dadurch gekennzeichnet, dass** das Betätigungsmittel zum Betätigen der Axialbewegung des Saugnapfelements (12a) und das Betätigungsmittel zum Antreiben der Axialbewegung des kooperierenden Elements (12b) ausgewählt sind unter einem hydraulischen Betätigungsglied, einem pneumatischen Betätigungsglied und einem elektromechanischen Betätigungsglied umfassend einen Elektromotor und ein von dem Elektromotor angetriebenes Schrauben- und Schraubenmutter-System.

## Revendications

1. Machine pour effectuer des opérations de coupe sur des plaques de verre feuilleté (L), comprenant :
- un établi (1), définissant un plan de support (2) qui est destiné à recevoir la plaque (L) à usiner,
- un pont de coupe fixe (6) sur lequel un chariot supérieur (10), portant un outil d'incision supérieur (8), et un chariot inférieur (9), portant un outil d'incision inférieur (7), sont montés de manière mobile dans une direction Y parallèle à la direction longitudinale du pont de coupe (6), ledit pont de coupe (6) étant pourvu d'un moyen d'actionnement pour entraîner le déplacement desdits chariots (9, 10) le long de la direction Y,
- un moyen pour déplacer ladite plaque (L) sur l'établi fixe (1) dans une direction horizontale X perpendiculaire à ladite direction Y,
- un moyen (12a, 12b, 14, 15) pour amener la plaque, ou une partie de plaque coupée par ledit pont de coupe (6), à tourner sur ledit plan de support, ledit moyen de rotation comprenant :
- un élément de préhension (12a) pour la préhension d'un bord arrière (B) de la plaque (en référence à la direction d'avancement de la plaque sur le plan de support), et au moins un élément d'engagement de plaque (14, 15) adapté pour s'engager avec ledit bord arrière (B) de la plaque à un point espacé dudit élément de préhension (12a),
- ledit élément de préhension (12a) et ledit élément d'engagement (14, 15) pouvant se déplacer respectivement le long de la direction Y du pont de coupe (6) et le long de la direction X du plan de support de plaque (2), et
- ladite machine comprenant en outre une unité de commande électronique (PC) configurée pour entraîner un déplacement synchrone dudit élément de préhension (12a) et dudit élément d'engagement (14, 15) respectivement le long de la direction Y et de la direction X pour obtenir une rotation de la plaque sur le plan de support (2), et
- où ledit élément de préhension (12a) comprend au moins un élément de ventouse (12a) configuré pour s'engager avec une face de la plaque adjacente audit bord arrière (B), ledit élément de ventouse (12a) étant supporté de sorte qu'il puisse tourner librement autour d'un axe vertical (A) par l'un desdits chariots (9,10) et pouvant se déplacer par un moyen d'actionnement le long dudit axe vertical (A) entre une position d'engagement avec la plaque et une position espacée de la plaque,
**caractérisée en ce que** ledit au moins un élément d'engagement (14, 15) comprend des premier (14) et deuxième (15) éléments d'engagement qui sont adaptés pour s'engager avec ledit bord arrière (B) de la plaque à différentes étapes ultérieures, de manière à obtenir la rotation requise de la plaque, et
- ledit premier élément d'engagement (14) est porté par la structure fixe de la machine en amont du pont de coupe (6), et ledit deuxième élément d'engagement (15) est placé en aval du pont de coupe fixe (6).

2. Machine selon la revendication 1, **caractérisée en ce que** ledit premier élément d'engagement (14) peut se déplacer dans la direction d'avancement (D) de la plaque pour appliquer une force dans ladite direction sur ledit bord arrière (B) afin d'amener la plaque à effectuer une première partie de la rotation requise.

3. Machine selon la revendication 1, **caractérisée en ce que** ledit deuxième élément d'engagement (15) est porté par un pont auxiliaire (3) qui peut se déplacer en dessous du plan de support (2) et est configuré pour s'engager avec ledit bord arrière (B) de la plaque à travers une fente longitudinale (2a) dudit plan de support (2), ledit pont auxiliaire (3) pouvant se déplacer dans la direction d'avancement de la plaque pour tirer dans ladite direction ledit bord arrière (B) de la plaque à travers ledit deuxième élément d'engagement (15), jusqu'à la fin de la rotation requise.

4. Machine selon la revendication 3, **caractérisée en ce que** ledit pont auxiliaire (3) est pourvu d'un nombre d'éléments d'arrêt (16) qui sont configurés pour être soulevés au-dessus du plan de support (2) à travers des fentes (2a) prévues dans l'établi (1) de manière à arrêter la plaque à une position correspondant à la longueur de coupe requise, ledit deuxième élément d'engagement étant un élément supplémentaire par rapport auxdits éléments d'arrêt qui est prévu sur ledit pont auxiliaire (3) et qui n'est pas adapté pour être utilisé pour la fonction d'arrêt de la plaque (L) mentionnée ci-dessus au niveau de la longueur de coupe requise.

5. Machine selon l'une quelconque des revendications précédentes, **caractérisée en ce que** ledit élément de préhension (12a) comprend en outre un deuxième élément (12b) coopérant avec ledit élément de ventouse et configuré pour s'engager avec la face de la plaque (L) opposée à celle engagée par l'élément de ventouse (12a) adjacente audit bord arrière (B), ledit deuxième élément de coopération (12b) étant porté par un chariot respectif (10) de sorte qu'il puisse tourner librement autour d'un axe vertical coïncidant avec l'axe vertical (A) de rotation dudit élément de ventouse et pouvant se déplacer par un moyen d'actionnement le long dudit axe vertical (A) entre une position d'engagement avec la plaque (L) et une position espacée de la plaque, et
**en ce que** ladite unité de commande électronique (PC) est programmée pour commander à la fois ledit élément de ventouse (12a) et ledit élément de coopération (12b), en activant seulement l'un de ces éléments ou les deux, en fonction des caractéristiques de la plaque de verre et/ou de la vitesse de fonctionnement qui est requise.

6. Machine selon la revendication 5, **caractérisée en ce que** ledit élément de coopération (12b) est également un élément de ventouse.

7. Machine selon la revendication 5, **caractérisée en ce que** ledit élément de coopération (12b) est un élément de pression configuré pour presser la plaque (L) contre l'élément de ventouse (12a) qui s'engage avec la face opposée de la plaque (L).

8. Machine selon la revendication 5, **caractérisée en ce que** ledit élément de ventouse (12a) est porté par le chariot inférieur (9) du pont de coupe (6) et est prévu pour s'engager avec la face inférieure de la plaque (L), tandis que ledit élément de pression (12b) est porté par le chariot supérieur (10) du pont de coupe (6) et est prévu pour s'engager avec la face supérieure de la plaque (L).

9. Machine selon la revendication 5, **caractérisée en ce que** le moyen d'actionnement permettant d'actionner le déplacement axial dudit élément de ventouse (12a) et le moyen d'actionnement permettant d'entraîner le déplacement axial dudit élément de coopération (12b) sont choisis parmi un actionneur hydraulique, un actionneur pneumatique, et un actionneur électromécanique comprenant un moteur électrique et un système à vis et écrou entraîné par le moteur électrique.
